# EUROPÄISCHE PATENTSCHRIFT

(11) **EP 1 616 122 B1**
(45) Veröffentlichungstag und Bekanntmachung des Hinweises auf die Patenterteilung: **28.02.2007**
(21) Anmeldenummer: 04726993.1
(22) Anmeldetag: 13.04.2004
(51) Int. Cl.: F16L 9/18

(54) **DOPPELWAND-WELLROHR**
DOUBLE-WALLED CORRUGATED PIPE
TUYAU ONDULE A DOUBLE PAROI

(30) Priorität: 24.04.2003 DE 20306407 U
(43) Veröffentlichungstag der Anmeldung: 18.01.2006
(73) Patentinhaber: Drossbach GmbH & Co. KG, 86641 Rain am Lech (DE)
(72) Erfinder: HETZNER, Claus, 90513 Zimdorf (DE); KELLNER, Michael, 86641 Rain/Sallach (DE)
(74) Vertreter: Altenburg, Udo
(86) Internationale Anmeldenummer: PCT/EP2004/003865
(87) Internationale Veröffentlichungsnummer: WO 2004/094888

(56) Entgegenhaltungen:
- GB-A- 1 412 651
- US-A- 4 145 387
- US-A- 5 564 472

## Beschreibung

Die Erfindung betrifft ein Doppelwand-Wellrohr nach dem Oberbegriff des Anspruchs 1.

Derartige Doppelwand-Wellrohre sind beispielsweise aus der DE 1 704 718 B und der US 4 145 387 bekannt. Während glatte Kunststoffrohre den Nachteil haben, dass sie nur eine geringe Scheiteldruckfestigkeit besitzen, also leicht zusammendrückbar sind, und gewellte Rohre, die zwar eine hohe Scheiteldruckfestigkeit aufweisen, jedoch den Nachteil haben, dass ihre Innenwand nicht glatt ist, sondern ebenfalls Querrillen aufweist, so dass solche Rohre nicht für Zwecke eingesetzt werden können, in denen eine glatte Innenwand gefordert werden muss, beispielsweise für die Abwassertechnik oder für Klima-, Belüftungs- und Förderleitungen, vereinen Doppelwand-Wellrohre die Vorteile glatter wie auch gewellter Kunststoffrohre, wobei die vorgenannten Nachteile jeweils vermieden werden.

Bei den Doppelwandwellrohren ist jeweils ein gewelltes Außenrohr mit einem glatten Innenrohr im Bereich der inneren Falten des Außenrohrs miteinander verschweißt. Dabei wurden zwischen Innenrohr und Außenrohr Hohlräume gebildet, wobei durch das Herstellungsverfahren bedingt die Hohlräume bei der Bildung des Wellrohres teilweise mit Druckluft und/oder je nach zeitlichem Ablauf mit Vakuum beaufschlagt werden. Während des Herstellungsprozesses wird das Rohr und somit wurden auch die vorhandenen Luftkammern abgekühlt. Hierbei besteht grundsätzlich die Gefahr, dass sich die Wellrohrkontur derart ändert, dass das Innenrohr im Wellenbereich nach außen und die Welle nach innen verformt wird. Um eine derartige Verformung während des Abkühlprozesses zu verhindern, werden insbesondere bei Rohren mit größeren Abmessungen die Hohlräume miteinander verbunden und zur Umgebung hin offen gehalten. Dies erfolgt mittels eines Verbindungskanals der Wellrohrhohlräume, der im Bereich der Verschweißungszone des Wellrohres mit dem Innenrohr jeweils derart ausgebildet ist, dass gleichzeitig eine Öffnung zur Umgebung hin geschaffen ist. Dieser Verbindungskanal wird auch als Vent bezeichnet.

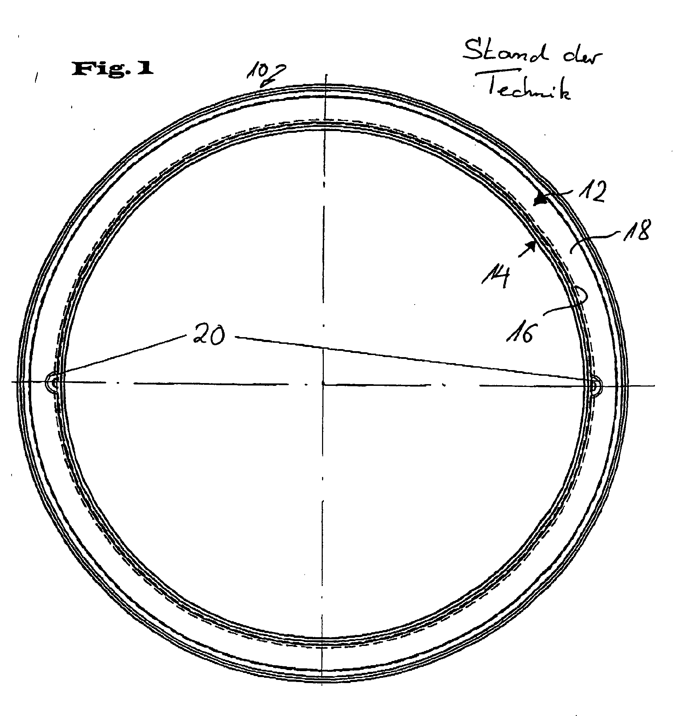

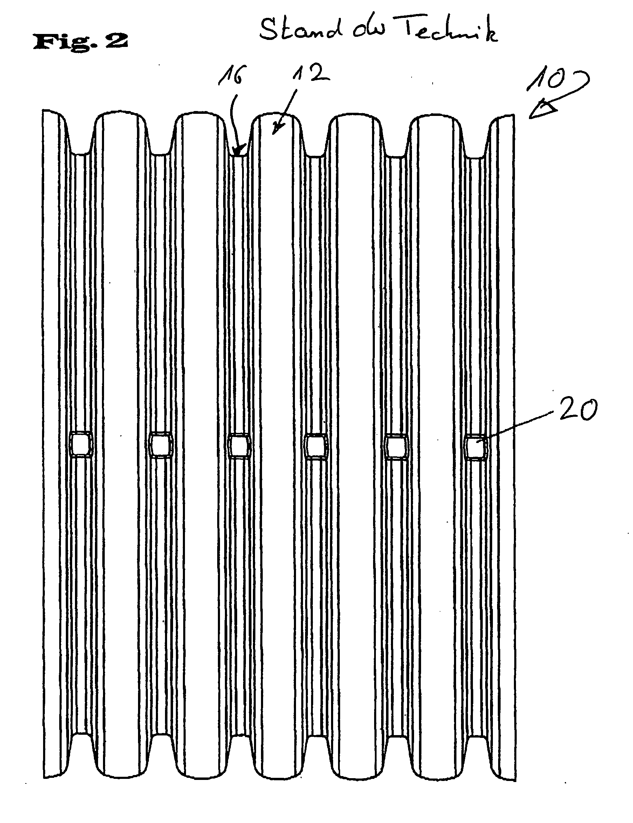

In den Fig. 1 und 2 sind Wellrohre nach dem Stand der Technik gezeigt. Während die Fig. 1 einen Schnitt darstellt, zeigt die Fig. 2 eine Seitenansicht eines kurzen Wellrohrstücks.

Hier weist ein Wellrohr 10 ein gewelltes Außenrohr 12 und ein glattes Innenrohr 14 auf. Im Bereich der inneren Falten 16 des Außenrohrs ist dieses mit dem Innenrohr 14 verschweißt. Dadurch werden einerseits vom gewellten Außenrohr und andererseits vom glatten Innenrohr 14 begrenzte Hohlräume 18 gebildet. Im Bereich der Verschweißungszonen 16 sind zwei benachbarte Hohlräume jeweils mittels Verbindungskanälen 20 miteinander und mit der Umgebungsatmosphäre verbunden. Die Verbindungskanäle ermöglichen also den Luftaustausch zwischen den Hohlräumen 18 und der Umgebung.

Wie in Fig. 1 und in Fig. 2 dargestellt, sind die zur Entlüftung dienenden Verbindungskanäle 20 diametral zueinander, also um 180° versetzt zueinander angeordnet. Diese liegen, wie hier in den Fig. 1 und 2 dargestellt auf der waagerechten Mittellinie des Rohres. Aufgrund dieser Ausrichtung der Verbindungskanäle wird der Rohrquerschnitt des Doppelwand-Wellrohres geschwächt.

Aufgabe der Erfindung ist es, Doppelwand-Wellrohre nach dem Oberbegriff des Anspruchs 1 derart weiterzubilden, dass sie trotz Vorsehen von zur Entlüftung dienenden Verbindungskanälen, sogenannten Vents, eine vergleichsweise erhöhte Stabilität aufweisen.

Erfindungsgemäß wird diese Aufgabe durch die Merkmalskombination der Merkmale des Anspruchs 1 gelöst. Demnach sind die Verbindungskanäle von einander benachbarten Verschweißungszonen zueinander versetzt angeordnet. Hiermit wird die Schwächung besser auf den gesamten Rohrquerschnitt verteilt, so dass die Gesamtschwächung des Rohres erheblich vermindert werden kann. Durch diese Maßnahme kann eine Stabilitätserhöhung des Rohres bezogen auf Ringsteifigkeit sowie die Elastizität des Rohres erzielt werden.

Bevorzugte Ausgestaltungen der Erfindung ergeben sich aus den sich an den Hauptanspruch anschließenden Unteransprüchen.

Demnach kann der Versatzwinkel der Verbindungskanäle zweier benachbarter Verschweißungszonen ca. 90° betragen. Gemäß einer anderen bevorzugten Ausführungsvariante der Erfindung kann der Versatzwinkel der Verbindungskanäle zweier benachbarter Verschweißungszonen alternierend ca. 45° und ca. 90° betragen.

Die in einer Verschweißungszone angeordneten Verbindungskanäle können jeweils um 180° versetzt angeordnet sein.

Weitere Einzelheiten und Vorteile der Erfindung ergeben sich aus den in der beigefügten Zeichnung dargestellten Ausführungsbeispielen. Es zeigen:
- Fig. 1:: einen Querschnitt durch ein Doppelwand-Wellrohr nach dem Stand der Technik,
- Fig. 2:: eine Seitenansicht auf das Doppelwand-Wellrohr gemäß Fig. 1 nach dem Stand der Technik,
- Fig. 3:: einen Querschnitt durch ein Doppelwand-Wellrohr gemäß einer ersten Ausführungsvariante der vorliegenden Erfindung,
- Fig. 4:: eine Seitenansicht auf das Doppelwand-Wellrohr gemäß Fig. 3,
- Fig. 5:: einen Querschnitt durch eine zweite Ausführungsvariante des erfindungsgemäßen Doppelwand-Wellrohres und
- Fig. 6:: eine Seitenansicht des Wellrohrs gemäß Fig. 5.

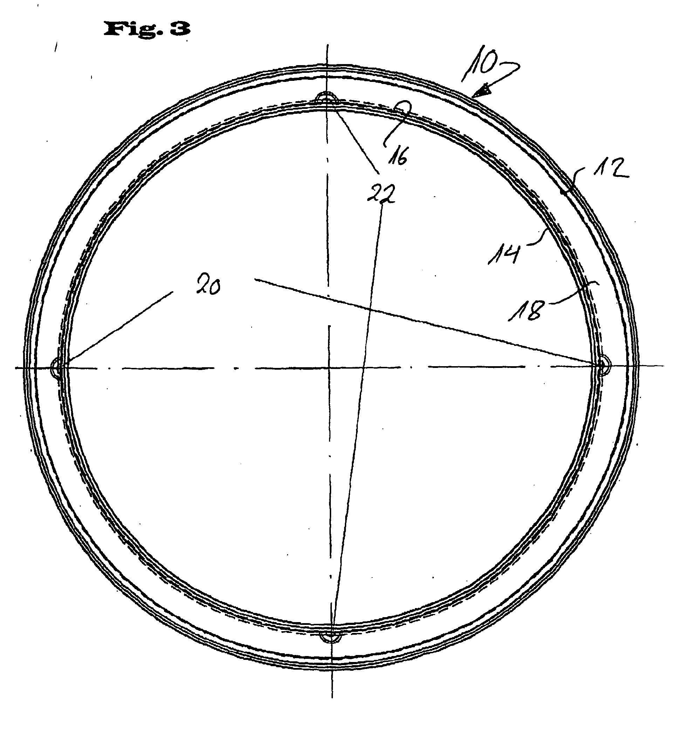

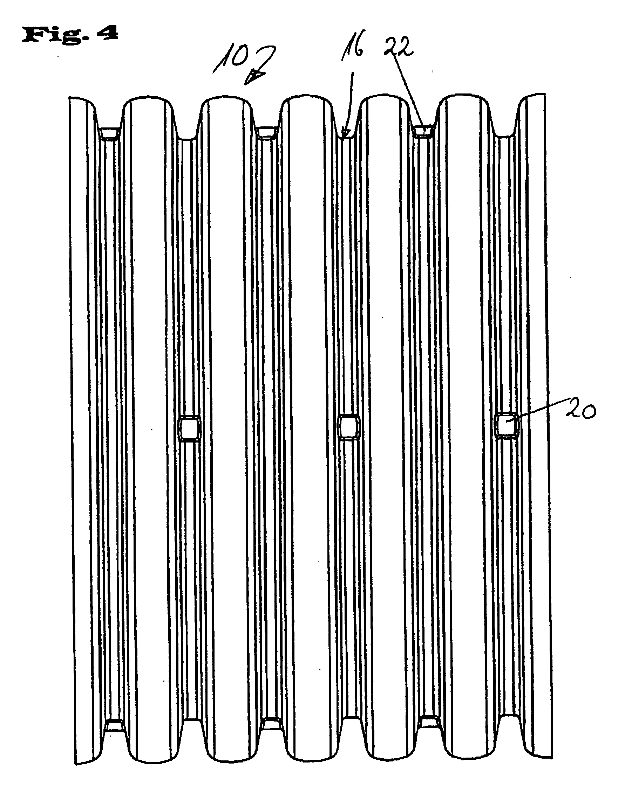

In den Figuren 3 und 4 ist ein Doppelwand-Wellrohr 10 gemäß einer ersten Ausführungsform der vorliegenden Erfindung gezeigt. Dieses weist in bekannter Weise ein gewelltes Außenrohr 12 und ein glattes Innenrohr 14 auf. Auch hier sind im Bereich der inneren Falten 16 des Außenrohres Verschweißzonen zum Verschweißen des Außenrohres mit dem Innenrohr 14 vorhanden. Es ergeben sich somit zwischen dem gewellten Außenrohr einerseits und dem glatten Innenrohr 14 andererseits begrenzte Hohlräume 18. Im Bereich der Verschweißungszonen 16 sind zwei benachbarte Hohlräume jeweils mittels Verbindungskanälen 20 bzw. 22 miteinander und mit der Umgebungsatmosphäre verbunden. Die Verbindungskanäle ermöglichen also den Luftaustausch zwischen den Hohlräumen 18 und der Umgebung. In einer Ebene sind im hier dargestellten Ausführungsbeispiel jeweils zwei zur Entlüftung dienende Verbindungskanäle 20 bzw. 22 diametral zueinander, also um 180° versetzt zueinander angeordnet. Gemäß der vorliegenden Erfindung sind die zur Entlüftung dienenden Verbindungskanäle 20 bzw. 22 von benachbarten Verschweißungsbereichen um 90° versetzt, wie sich insbesondere aus den Figuren 3 und 4 ergibt. In der hier dargestellten Ausführungsvariante wechseln die Verbindungskanäle 20 bzw. 22 von einer Ausrichtung bei 0° und 180° auf 90° und 270°. Durch diese gleichmäßige Verteilung der Entlüftungskanäle wird die Steifigkeit des Doppelwand-Wellrohres 10 erheblich gesteigert. Im hier dargestellten Ausführungsbeispiel werden zwei Entlüftungskanäle vorgesehen, da bedingt durch die Massenverteilung und die sich ergebenden Abweichungen bei der Herstellung der Doppelwand-Wellrohre von der ideal zentrischen Lage des Spritzkopfes diese Entlüflungskanäle toleranzbehaftet sind. Dies kann dazu führen, dass bei der Verwendung nur eines Entlüftungskanals dieser während der Produktion immer wieder verschlossen werden kann, was dann zu Formfehlern im Rohr führen würde. Durch die Verwendung von zwei Entlüftungskanälen wird dies weitgehend ausgeschlossen.

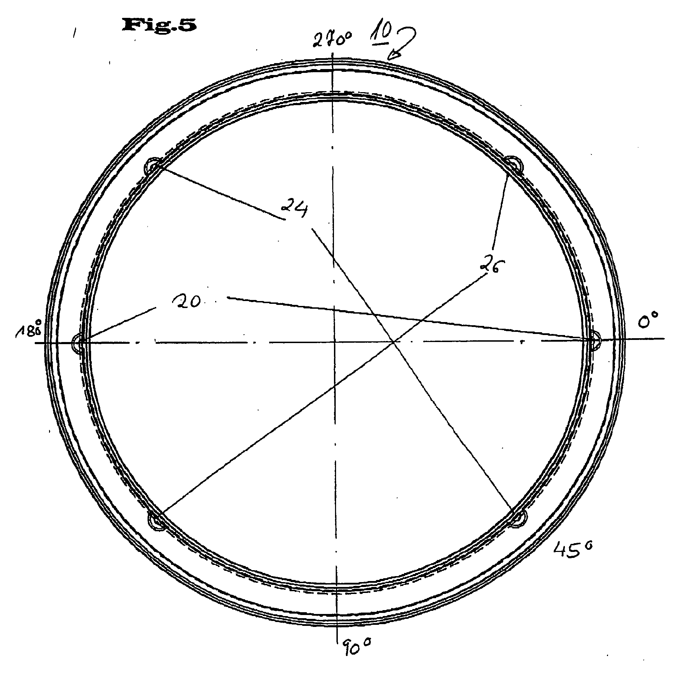

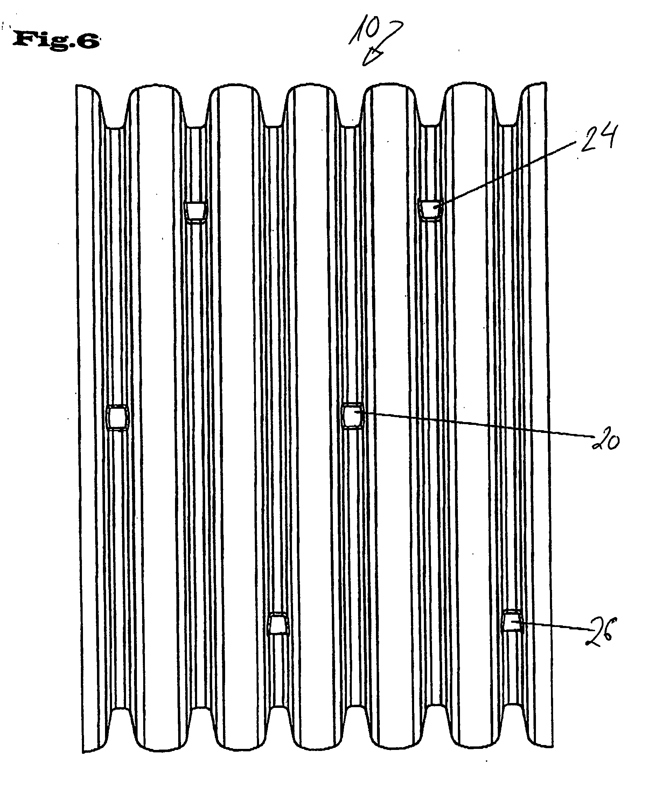

In den Figuren 5 und 6 ist eine alternative Ausführungsvariante der vorliegenden Erfindung gezeigt. Hier sind in einem Doppelwand-Wellrohr, das prinzipiell in gleicher Weise aufgebaut ist, wie dies zuvor anhand der Figuren 3 und 4 beschrieben wurde, in drei benachbarten Verschweißungsbereichen jeweils unterschiedliche Lagen der zur Entlüftung dienenden Verbindungskanäle 20, 24 und 26 angeordnet. Dabei sind von einer Ausrichtung der Verbindungskanäle 20 in 0°- bzw. 180°-Stellung ausgehend die nächstfolgenden Verbindungskanäle gegenüber dieser Position um ca. 45° versetzt, so dass die zur Entlüftung dienenden Verbindungskanäle 24 in einer Position von 45° und 225° angeordnet sind und die in den weites benachbarten Verschweißungsbereich liegenden zur Entlüftung dienenden Verbindungskanäle 26 sind gegenüber den Verbindungskanälen 24 wiederum um 90° versetzt, so dass sie in einer Position 135° und 315° angeordnet sind.

Die in den Figuren 3 und 4 bzw. 5 und 6 dargestellten Ausführungsbeispiele sind keineswegs beschränkend. Grundsätzlich kann zur Stabilisationserhöhung der Doppelwand-Wellrohre 10 auch ein anderer Versatzwinkel gewählt werden.

## Patentansprüche

1. Doppelwand-Wellrohr (10) mit einem gewellten Außenrohr (12) und einem glatten Innenrohr (14), die im Bereich der inneren Falten (16) des Außenrohrs miteinander verschweißt sind und so zwischen Innenrohr und Außenrohr Hohlräume (18) bilden, mit jeweils mindestens zwei Verbindungskanälen (20), die sich im Bereich der Verschweißungszone (16) zwischen den Hohlräumen bis hin zur Umgebung erstrecken und so die Hohlräume zur Umgebung hin offen halten,
**dadurch gekennzeichnet,**
**daß** die Verbindungskanäle (20) von einander benachbarten Verschweißungszonen zueinander versetzt angeordnet sind.

2. Doppelwand-Wellrohr nach Anspruch 1, **dadurch gekennzeichnet, daß** der Versatzwinkel der Verbindungskanäle (20) zweier benachbarter Verschweißungszonen ca. 90° beträgt.

3. Doppelwand-Wellrohr nach Anspruch 1, **dadurch gekennzeichnet, daß** der Versatzwinkel der Verbindungskanäle (20) zweier benachbarter Verschweißungszonen altemierend ca. 45° und 90° beträgt.

4. Doppelwand-Wellrohr nach einem der Ansprüche 1 bis 3, **dadurch gekennzeichnet, daß** die in einer Verschweißungszone angeordneten Verbindungskanäle (20) jeweils um 180° versetzt angeordnet sind.

## Claims

1. A double-walled corrugated pipe (10) comprising a corrugated outer pipe (12) and a smooth inner pipe (14) which are welded together in the region of the inner folds (16) of the outer pipe, thereby forming cavities (18) between the inner pipe and the outer pipe, each having at least two connecting channels (20) which extend in the region of the welding zone (16) between the cavities as far as the surrounding area, so that the cavities remain open to the surrounding area,
**characterized in that**
the connecting channels (20) are arranged in an offset manner in relation to adjacent welding zones.

2. The double-walled corrugated pipe according to claim 1, **characterized in that** the offset angle of the connecting channels (20) of two adjacent welding zones is about 90°.

3. The double-walled corrugated pipe according to claim 1, **characterized in that** the offset angle of the connecting channels (20) of two adjacent welding zones is alternately about 45° and 90°.

4. The double-walled corrugated pipe according to any one of the claims 1 to 3, **characterized in that** the connecting channels (20) arranged in a welding zone are each offset by 180°.

## Revendications

1. Tube ondulé à double paroi (10) avec un tube extérieur ondulé (12) et un tube intérieur lisse (14), lesquels sont soudés entre eux dans la région des plis intérieurs (16) du tube extérieur et forment ainsi des cavités (18) entre le tube intérieur et le tube extérieur, avec chacun au moins deux canaux de liaison (20) qui s'étendent dans la région de la zone de soudure (16) entre les cavités jusqu'à l'extérieur et maintiennent ainsi les cavités ouvertes vers l'extérieur, **caractérisé en ce que** les canaux de liaison (20) de zones de soudure voisines l'une de l'autre sont disposés avec un décalage mutuel.

2. Tube ondulé à double paroi selon la revendication 1, **caractérisé en ce que** l'angle de décalage des canaux de liaison (20) de deux zones de soudure voisines est d'environ 90°.

3. Tube ondulé à double paroi selon la revendication 1, **caractérisé en ce que** l'angle de décalage des canaux de liaison (20) de deux zones de soudure voisines est alternativement d'environ 45° et 90°.

4. Tube ondulé à double paroi selon une des revendications 1 à 3, **caractérisé en ce que** les canaux de liaison (20) situés dans une zone de soudure sont disposés avec un décalage mutuel de 180°.
